# FASCICULE DE BREVET EUROPEEN

(11) **EP 4 295 311 B1**
(45) Date de publication et mention de la délivrance du brevet: **30.09.2026**
(21) Numéro de dépôt: 22708204.7
(22) Date de dépôt: 10.02.2022
(51) Int. Cl.: G06T 7/55

(54) **PROCÉDÉ D'ESTIMATION D'UNE MESURE DE FIABILITÉ D'UNE ESTIMATION DE DISTANCE MÉTRIQUE ENTRE UNE CAMÉRA ET AU MOINS UN POINT DE SON ENVIRONNEMENT**
VERFAHREN ZUR SCHÄTZUNG EINES VERLÄSSLICHKEITSMASSES EINER METRISCHEN DISTANZSCHÄTZUNG ZWISCHEN EINER KAMERA UND MINDESTENS EINEM PUNKT IHRER UMGEBUNG
METHOD FOR ESTIMATING A MEASURE OF RELIABILITY OF A METRIC DISTANCE ESTIMATE BETWEEN A CAMERA AND AT LEAST ONE POINT OF ITS ENVIRONMENT

(30) Priorité: 16.02.2021 FR 2101482
(43) Date de publication de la demande: 27.12.2023
(73) Titulaire: SAFRAN, 75015 Paris (FR)
(72) Inventeur: BENAICHOUCHE, Ahmed Nasreddinne, 77550 MOISSY-CRAMAYEL (FR); PICARD, Sylvaine, 77550 MOISSY CRAMAYEL (FR)
(74) Mandataire: Cabinet Camus Lebkiri
(86) Numéro de dépôt international: PCT/FR2022/050245
(87) Numéro de publication internationale: WO 2022/175617

(56) Documents cités:
- US-A1- 2020 273 190
- US-B2- 10 896 333
- KEISUKE TATENO ET AL: "CNN-SLAM: Real-time dense monocular SLAM with learned depth prediction", ARXIV.ORG, CORNELL UNIVERSITY LIBRARY, 201 OLIN LIBRARY CORNELL UNIVERSITY ITHACA, NY 14853, 11 April 2017 (2017-04-11), XP080762383, DOI: 10.1109/CVPR.2017.695

## Description

### DOMAINE TECHNIQUE DE L'INVENTION

Le domaine technique de l'invention est celui des procédés d'estimation de la distance entre une caméra mobile et au moins un point de son environnement, et en particulier celui des procédés d'estimation d'une mesure de fiabilité d'une telle estimation de distance.

La présente invention concerne un procédé d'estimation d'une mesure de fiabilité d'une estimation de distance métrique entre une caméra mobile et chaque point d'un environnement imagé par la caméra. La présente invention concerne également un procédé de commande d'un robot mobile ou d'un véhicule mobile comportant les étapes du procédé d'estimation.

### ARRIERE-PLAN TECHNOLOGIQUE DE L'INVENTION

Dans le contexte de la navigation des systèmes mobiles, et en particulier des véhicules autonomes, la connaissance de la structure tridimensionnelle de la scène entourant le système est indispensable pour lui permettre de planifier une trajectoire sûre prenant en compte les obstacles.

Traditionnellement, cette connaissance est obtenue par le biais de capteurs actifs tels que les capteurs de détection par laser ou LIDAR (pour « light detection and ranging ») embarqués sur le système. Cependant, ces capteurs sont chers, consommateurs d'énergie et encombrants, et ne sont donc pas compatibles avec tous les types de systèmes mobiles. De plus, ces capteurs ne donnent pas forcément d'informations sur tous les points de la scène et des obstacles peuvent donc ne pas être détectés.

Pour remédier à ces problèmes, il est connu d'utiliser un algorithme d'inférence de profondeur, généralement basé sur de l'apprentissage profond ou deep learning, sur une image de l'environnement du système acquise par une caméra embarquée sur le système. Un tel algorithme permet d'obtenir pour chaque pixel de l'image, une estimation de la distance métrique entre la caméra et le point représenté sur le pixel. Cependant, ce type d'algorithmes présente le désavantage de ne pas pouvoir alerter dans les situations où il est susceptible de commettre des erreurs, comme par exemple quand il doit traiter des données d'un type inconnu. Cette limitation rend quasiment impossible l'utilisation de cette technologie dans les applications autonomes qui nécessitent un haut niveau de sécurité.

Pour pallier ce problème, des méthodes d'estimation de la fiabilité des estimations de l'algorithme ont été développées mais celles-ci sont basées sur la même technologie que celle utilisée par l'algorithme d'inférence de profondeur et soufrent donc potentiellement des mêmes problèmes de fiabilité.

L'article intitulé "CNN-SLAM: Real-time dense monocular SLAM with learned depth prediction", de KEISUKE TATENO ET. AL., ARXIV.ORG, CORNELL UNIVERSITY LIBRARY, 201 OLIN LIBRARY CORNELL UNIVERSITY ITHACA, NY 14853, 11 avril 2017 (2017-04-11), divulgue une méthode dans laquelle les cartes de profondeur denses prédites par un réseau neuronal convolutif (CNN) sont fusionnées de manière naturelle avec les mesures de profondeur obtenues par un SLAM monoculaire. Le schéma de fusion privilégie la prédiction de profondeur aux emplacements de l'image où les approches SLAM monoculaires ont tendance à échouer, par exemple le long de zones peu texturées, et inversement.

Le brevet US 2020/273190 A1 (YE XINCHEN [CN] ET AL) (2020-08-27) divulgue un procédé de reconstruction dense de scènes 3D à partir d'une caméra monoculaire, dans lequel la reconstruction est obtenue par la fusion d'un calcul de profondeur traditionnel basé sur la géométrie et d'une prédiction de profondeur basée sur un réseau neuronal convolutif (CNN). Le suivi de caméra par SLAM basé sur les caractéristiques fournit une estimation précise de la pose, tandis que le modèle de reconstruction de profondeur, qui combine des points de profondeur clairsemés et une profondeur déduite par le CNN, permet d'obtenir une estimation dense de la profondeur et une reconstruction de la scène 3D.

Le brevet US10896333 B2 (SAFRAN [FR]) (2021-01-19) divulgue un procédé d'aide à la conduite d'un véhicule, qui comprend la construction d'un modèle numérique définissant un indice de qualité pour une image de déduction 3D dérivée d'une image d'origine, cet indice étant une fonction de mesures de similarité définies entre l'image d'origine et l'image de déduction 3D, et cette construction s'appuyant sur un ensemble d'observations obtenues à partir d'images de déduction 3D de référence résultant de l'application de méthodes de déduction 3D à une pluralité d'images d'origine de référence.

Il existe donc un besoin de connaître la fiabilité de l'estimation de la structure tridimensionnelle de la scène entourant un système sans avoir recours à des équipements coûteux et encombrants.

### RESUME DE L'INVENTION

L'invention offre une solution aux problèmes évoqués précédemment, en permettant d'obtenir une mesure de fiabilité de l'estimation de la distance métrique entre un système et chaque objet de son environnement imagé par une caméra du système, sans avoir recours à des équipements incompatibles avec un fonctionnement en embarqué.

L'invention est définie par les revendications ci-jointes. Un premier aspect de l'invention concerne un procédé d'estimation d'une mesure de fiabilité d'une estimation de distance métrique entre une caméra mobile et chaque point d'un environnement imagé par la caméra, selon la revendication 1.

Grâce à l'invention, l'algorithme d'inférence de profondeur fournit une première estimation de profondeur pour chaque pixel de l'image de référence et permet donc d'estimer la distance entre la caméra et chaque objet représenté dans l'image de référence. Chaque première estimation de profondeur est associée à une mesure de fiabilité de l'estimation indiquant le degré de confiance que l'on peut accorder à l'estimation. La mesure de fiabilité est basée sur une deuxième estimation de profondeur fournie par un algorithme de cartographie et de localisation simultanées ou algorithme SLAM pour certains pixels de l'image de référence. L'algorithme SLAM utilise des critères géométriques sur les images acquises par la caméra et le déplacement de la caméra pour fournir son estimation, contrairement à l'algorithme d'inférence de profondeur basé sur un réseau de neurones. La première estimation de profondeur et la deuxième estimation de profondeur sont donc basées sur des technologies différentes et la deuxième estimation de profondeur ne soufre donc pas des mêmes problèmes de fiabilité que la première estimation de profondeur. Il est d'ailleurs possible d'obtenir via l'algorithme SLAM, une incertitude sur la deuxième estimation de profondeur et d'ainsi contrôler la fiabilité de la deuxième estimation de profondeur pour s'assurer que la mesure de fiabilité associé à la première estimation de profondeur est basée sur une deuxième estimation de profondeur elle-même fiable.

Il est alors possible d'utiliser l'invention dans une application critique telle que la robotique mobile dans laquelle il est indispensable de savoir quand l'estimation de distance utilisée n'est pas fiable pour adapter les calculs de trajectoire en conséquence.

Outre les caractéristiques qui viennent d'être évoquées dans le paragraphe précédent, le procédé d'estimation selon le premier aspect de l'invention peut présenter une ou plusieurs caractéristiques complémentaires parmi les suivantes, considérées individuellement ou selon toutes les combinaisons techniquement possibles.

Le procédé d'estimation selon l'invention comporte en outre une étape de détermination d'un modèle linéaire entre la carte de profondeur dense et la carte de profondeur éparse.

Pour un pixel donné, l'algorithme d'inférence de profondeur estime la distance métrique entre la caméra et l'objet représenté sur le pixel alors que l'algorithme SLAM estime une distance non métrique, c'est-à-dire une distance proportionnelle à la distance métrique.

Ainsi, s'il n'y a pas d'anomalie dans les estimations fournies par l'algorithme d'inférence de profondeur, il existe un modèle linéaire entre l'ensemble des deuxièmes estimations de profondeur et l'ensemble des premières estimations correspondantes. L'impossibilité de détermination du modèle linéaire, c'est-à-dire du coefficient de proportionnalité entre la carte de profondeur dense et la carte de profondeur éparse, autrement appelé facteur d'échelle, permet donc de détecter une anomalie de fonctionnement de l'algorithme d'inférence de profondeur.

Si le facteur d'échelle a pu être calculé, une comparaison entre la première estimation de profondeur et la deuxième estimation de profondeur correspondante rendue métrique en la multipliant par le facteur d'échelle estimée est alors possible.

Selon une première sous-variante de réalisation de la première variante de réalisation, faisant partie de l'invention telle que revendiquée, l'étape de détermination d'un modèle linéaire comporte en outre les sous-étapes suivantes :
- Estimation d'un facteur d'échelle entre la carte de profondeur dense et la carte de profondeur éparse à partir de la première estimation de profondeur et de la deuxième estimation de profondeur associées à chaque pixel d'un ensemble de pixels sélectionné parmi la pluralité de pixels ;
- Pour chaque pixel de l'ensemble de pixels, calcul d'une erreur résiduelle à partir du facteur d'échelle estimé et de la première estimation de profondeur et de la deuxième estimation de profondeur associées au pixel ;
- Calcul de la moyenne des erreurs résiduelles inférieures au premier seuil d'erreur ;
- Réalisation d'un test de normalité sur les erreurs résiduelles inférieures au seuil d'erreur ;
- Si la valeur absolue de la moyenne est supérieure à un premier seuil de moyenne ou si le test de normalité est négatif, arrêt du procédé et affectation d'une mesure de fiabilité minimale à chaque pixel de l'image de référence.

Ainsi, un modèle linéaire optimal est estimé puis sa validité testée.

Les points ayant une erreur résiduelle trop importante sont considérés comme aberrants. Si les erreurs résiduelles des points non aberrants ne suivent pas une loi normale de moyenne nulle, une mesure de fiabilité minimale est affectée. Dans le cas nominal, une mesure de fiabilité peut être calculée.

Selon une première alternative de réalisation de la première sous-variante de réalisation, l'étape d'estimation du facteur d'échelle est réalisée en outre à partir d'un historique d'estimations de profondeur comportant les premières estimations de profondeur et les deuxièmes estimations de profondeur obtenues pour au moins une image précédemment acquise par la caméra.

Ainsi, le facteur d'échelle est estimé à partir d'estimations réalisées à plusieurs instants d'acquisition et donc à partir d'un jeu plus important de données, ce qui est possible car le modèle linéaire est constant, c'est-à-dire le même à chaque instant d'acquisition.

Selon une deuxième alternative de réalisation de la première sous-variante de réalisation compatible avec la première alternative de réalisation, l'étape de détermination d'un modèle linéaire comporte en outre, si le rapport entre le nombre de pixels pour lesquels l'erreur résiduelle est supérieure au premier seuil d'erreur, et le nombre de pixels de l'ensemble de pixels est supérieur à un premier seuil d'aberration, une étape d'arrêt du procédé et d'affectation d'une mesure de fiabilité minimale à chaque pixel de l'image de référence.

Les points ayant une erreur résiduelle trop importante sont considérés comme aberrants. Si leur proportion est trop importante, l'algorithme d'inférence de profondeur et l'algorithme SLAM sont considérés comme étant en désaccord et une mesure de fiabilité minimale est donc affectée. Dans le cas nominal, une mesure de fiabilité peut être calculée.

Selon une deuxième sous-variante de réalisation de la première variante de réalisation, ne faisant pas partie de l'invention telle que revendiquée, l'étape de détermination d'un modèle linéaire comporte les sous-étapes suivantes :
- Pour chaque itération d'un ensemble d'itérations :
   - Partition des pixels d'un ensemble de pixels sélectionné parmi la pluralité de pixels en un premier échantillon et un deuxième échantillon ;
   - Estimation d'un facteur d'échelle à partir de la première estimation de profondeur et de la deuxième estimation de profondeur associées à chaque pixel du premier échantillon ;
   - Calcul d'une erreur résiduelle à partir du facteur d'échelle estimé et de la première estimation de profondeur et de la deuxième estimation de profondeur associées à chaque pixel du deuxième échantillon ;
   - Calcul de la valeur moyenne des erreurs résiduelles inférieures à un deuxième seuil d'erreur ;
- Calcul de la variance des facteurs d'échelle estimés sur l'ensemble d'itérations ;
- Si la variance des facteurs d'échelle estimés est supérieure à un premier seuil de variance, arrêt du procédé et affectation d'une mesure de fiabilité minimale à chaque pixel de l'image de référence ;
- Sinon, calcul de la moyenne et de la variance des valeurs moyennes des erreurs résiduelles calculées sur l'ensemble d'itérations ;
- Si la moyenne des valeurs moyennes des erreurs résiduelles calculées est supérieure à un deuxième seuil de moyenne ou si la variance des valeurs moyennes des erreurs résiduelles calculées est supérieure à un deuxième seuil de variance, arrêt du procédé et affectation d'une mesure de fiabilité minimale à chaque pixel de l'image de référence.

Ainsi, à chaque itération, un modèle linéaire optimal est estimé sur les pixels d'un premier échantillon et des erreurs résiduelles sont calculées sur un deuxième échantillon ne se recoupant pas avec le premier échantillon, ce qui permet de ne pas utiliser les pixels utilisés pour estimer le facteur d'échelle pour tester l'estimation du facteur d'échelle.

Les points ayant une erreur résiduelle trop importante sont considérés comme aberrants et ne sont pas utilisés pour tester l'estimation du facteur d'échelle.

Si les facteurs d'échelle estimés ou les erreurs résiduelles calculées sur l'ensemble des itérations sont trop différents, une mesure de fiabilité minimale est alors affectée.

Selon une deuxième variante de réalisation, le procédé d'estimation selon l'invention comporte en outre les étapes suivantes :
- Fusion de la carte de profondeur éparse avec des données issues d'une centrale inertielle pour obtenir une carte de profondeur éparse métrique associant une deuxième estimation de profondeur métrique à chaque pixel de la pluralité de pixels ;
- Pour chaque pixel d'un ensemble de pixels sélectionné parmi la pluralité de pixels, calcul d'une erreur résiduelle à partir de la première estimation de profondeur et de la deuxième estimation de profondeur métrique associées au pixel ;
- Si le rapport entre le nombre de pixels pour lesquels l'erreur résiduelle est supérieure à un troisième seuil d'erreur, et le nombre de pixels est supérieur à un deuxième seuil d'aberration, arrêt du procédé et affectation d'une mesure de fiabilité minimale à chaque pixel de l'image de référence.

Ainsi, la deuxième estimation de profondeur métrique peut être directement comparée à la première estimation de profondeur.

Selon une première alternative de réalisation de la première variante de réalisation ou de la deuxième variante de réalisation, l'ensemble de pixels est sélectionné par tirage aléatoire parmi la pluralité de pixels de l'image de référence ou par tirage aléatoire parmi la pluralité de pixels dans une région de l'image de référence pour chaque région de l'image de référence.

Le tirage aléatoire permet de ne pas introduire de biais involontaires dans les points sélectionnés. La répartition des tirages par zones de l'image permet de garantir une bonne répartition des points au sein de l'image.

Selon une deuxième alternative de réalisation de la première variante de réalisation ou de la deuxième variante de réalisation, l'algorithme de cartographie et de localisation simultanées fournit en outre pour chaque pixel de la pluralité de pixels, une incertitude sur la deuxième estimation de profondeur et l'ensemble de pixels est sélectionné parmi les pixels de la pluralité de pixels répondant à une condition d'incertitude dépendant de l'incertitude sur la deuxième estimation de profondeur associée au pixel.

Selon une troisième variante de réalisation compatible avec la première variante de réalisation et la deuxième variante de réalisation, l'algorithme de cartographie et de localisation simultanées fournit en outre, pour chaque pixel de la pluralité de pixels, une incertitude sur la deuxième estimation de profondeur et l'étape de calcul de la mesure de fiabilité comporte les sous-étapes suivantes :
- Pour chaque pixel de la pluralité de pixels, calcul d'une erreur résiduelle à partir du facteur d'échelle estimé et de la première estimation de profondeur et de la deuxième estimation de profondeur associées au pixel ou à partir de la première estimation de profondeur et de la deuxième estimation de profondeur métrique associées au pixel ;
- Pour chaque pixel de la pluralité de pixels, calcul d'une mesure de cohérence dépendant de l'erreur résiduelle ;
- Pour chaque pixel n'appartenant pas à la pluralité de pixels, association d'un mesure de cohérence par interpolation à partir des mesures de cohérence associées aux pixels de la pluralité de pixels ;
- Pour chaque pixel de l'image de référence, calcul d'une mesure de fiabilité dépendant de la mesure de cohérence et de l'incertitude sur la deuxième estimation de profondeur associées au pixel.

Ainsi, la mesure de fiabilité est basée d'une part sur une comparaison entre la première estimation de profondeur et la deuxième estimation de profondeur pour le pixel, rendues comparables par la prise en compte du facteur d'échelle ou de données issues de la centrale inertielle, et d'autre part sur l'incertitude sur la deuxième estimation de profondeur, et prend donc en compte la fiabilité de la deuxième estimation de profondeur pour calculer la fiabilité de la première estimation de profondeur.

Selon une quatrième variante de réalisation compatible avec la première variante de réalisation, la deuxième variante de réalisation et la troisième variante de réalisation, le procédé d'estimation selon l'invention comporte en outre une étape de calcul, pour chaque pixel de l'image de référence, d'une mesure de densité, comportant les sous-étapes suivantes :
- Pour chaque pixel de la pluralité de pixels, affectation d'une mesure de densité maximale ;
- Pour chaque pixel n'appartenant pas à la pluralité de pixels, affectation d'une mesure de densité obtenue par interpolation à partir des mesure de densité associées aux pixels de la pluralité de pixels.

Ainsi, la mesure de densité indique pour chaque pixel, la densité de pixels de la pluralité de pixels ayant été impliqués dans le calcul de la mesure de fiabilité associée au pixel.

Un deuxième aspect de l'invention concerne un procédé de commande d'un robot mobile ou d'un véhicule mobile comprenant les étapes du procédé d'estimation selon l'invention.

Un troisième aspect de l'invention concerne un système pour la mise en œuvre du procédé d'estimation selon l'invention ou du procédé de commande selon l'invention, comportant une caméra et un calculateur.

Selon une variante de réalisation, le système selon l'invention comporte en outre une centrale inertielle.

Un quatrième aspect de l'invention concerne un produit-programme d'ordinateur comprenant des instructions qui, quand le programme est exécuté sur un ordinateur, conduisent celui-ci à mettre en œuvre les étapes du procédé d'estimation selon l'invention ou du procédé de commande selon l'invention.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La figure 1 est un schéma synoptique illustrant l'enchaînement des étapes d'un procédé d'estimation selon l'invention.
- La figure 2 est un schéma synoptique illustrant l'enchaînement des étapes d'une première alternative de réalisation d'une quatrième étape du procédé d'estimation selon l'invention.
- La figure 3 est un schéma synoptique illustrant l'enchaînement des étapes d'une deuxième alternative de réalisation de la quatrième étape du procédé d'estimation selon l'invention.
- La figure 4 est un schéma synoptique illustrant l'enchaînement des étapes d'une troisième alternative de réalisation de la quatrième étape du procédé d'estimation selon l'invention.
- La figure 5 est un schéma synoptique illustrant l'enchaînement des étapes d'une cinquième étape du procédé d'estimation selon l'invention.
- La figure 6 montre une représentation schématique d'un système selon l'invention.

### DESCRIPTION DETAILLEE

Sauf précision contraire, un même élément apparaissant sur des figures différentes présente une référence unique.

Un premier aspect de l'invention concerne un procédé d'estimation, pour chaque point d'un environnement imagé par une caméra mobile, d'une mesure de fiabilité d'une estimation de distance métrique entre la caméra et le point, c'est-à-dire un procédé permettant d'obtenir la structure tridimensionnelle d'au moins une partie de la scène entourant la caméra, associée à au moins une carte de fiabilité.

Un deuxième aspect de l'invention concerne un procédé de commande d'un robot mobile ou d'un véhicule mobile comportant les étapes du procédé d'estimation selon le premier aspect de l'invention.

Un troisième aspect de l'invention concerne un système pour la mise en œuvre du procédé d'estimation ou du procédé de commande selon l'invention.

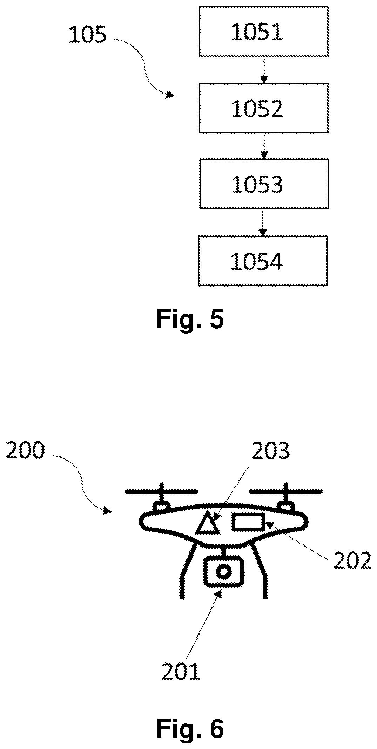

[Fig. 6] La figure 6 montre une représentation schématique du système 200 selon l'invention.

Le système 200 comprend par exemple un véhicule autonome, terrestre, aérien ou maritime, un robot mobile ou un drone.

Le système 200 comporte une caméra 201 et un calculateur 202.

Le système 200 peut également comporter une centrale inertielle 203.

Sur la figure 6, le système 200 est un drone comportant une caméra 201, un calculateur 202 et une centrale inertielle 203.

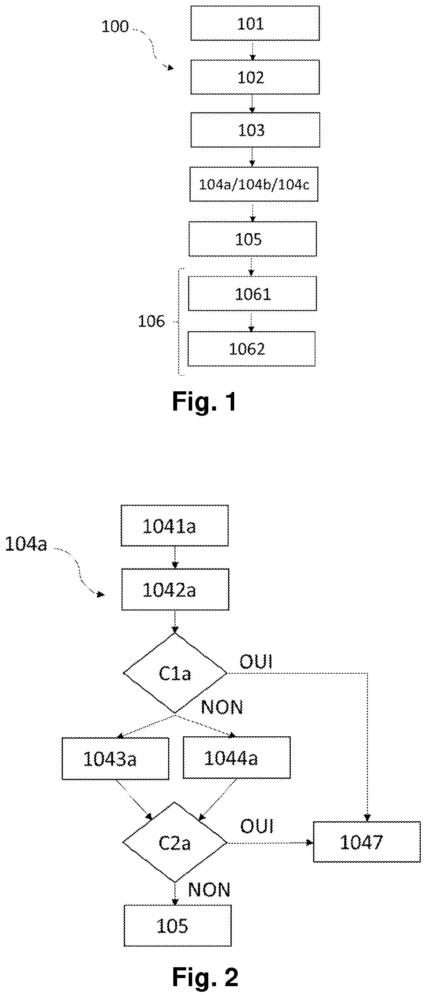

[Fig. 1] La figure 1 est un schéma synoptique illustrant l'enchaînement des étapes du procédé 100 d'estimation selon l'invention.

Une première étape 101 du procédé 100 consiste pour la caméra 201 à acquérir une succession d'images de son environnement, c'est-à-dire une série d'images acquises à des temps d'acquisition successifs.

Chaque image est par exemple une image RGB pour (« Red Green Blue ») ou une image en niveaux de gris.

La succession d'images comprend une image de référence acquise à un instant d'acquisition t.

L'image de référence est par exemple encadrée par des images dans la succession d'images, c'est-à-dire que l'instant d'acquisition t n'est pas le temps d'acquisition correspondant à la première image de la succession d'images acquise, ni le temps d'acquisition correspondant à la dernière image de la succession d'images acquise.

Chaque pixel de l'image de référence est associé à un point de l'environnement de la caméra 201.

Une deuxième étape 102 du procédé 100 consiste à obtenir une carte de profondeur dense de l'image de référence acquise à la première étape 101 à l'aide d'un algorithme d'inférence de profondeur.

Un exemple d'algorithme d'inférence de profondeur est décrit dans la publication « Deep multi-scale architectures for monocular depth estimation », par Michel Moukari, Sylvaine Picard, Loïc Simon et Frédéric Jurie, 2018 25th IEEE International Conference on Image Processing.

On entend par « carte de profondeur d'une image acquise par une caméra », une image dans laquelle au moins un pixel est associé à une profondeur, et on entend par « profondeur », une distance entre la caméra et l'objet représenté sur le pixel correspondant de l'image acquise.

La distance peut être métrique ou non métrique et la profondeur est alors respectivement métrique ou non métrique.

Une distance non métrique est proportionnelle à la distance métrique, c'est-à-dire qu'il existe un coefficient de proportionnalité ou facteur d'échelle unique entre chaque distance non métrique et sa distance métrique correspondante, le facteur d'échelle étant un scalaire réel non nul.

On entend par « carte de profondeur dense », une carte de profondeur dans laquelle chaque pixel est associé à une profondeur.

Dans la carte de profondeur dense obtenue à la deuxième étape 102, chaque pixel est associé à une première estimation de profondeur qui est métrique.

La deuxième étape 102 permet donc d'obtenir un vecteur ${D}_{deep}^{\left(t\right)}$ qui aux coordonnées x de chaque pixel associe une première estimation de profondeur.

L'algorithme d'inférence de profondeur est par exemple mis en œuvre via un réseau de neurones.

Une troisième étape 103 du procédé 100 consiste à obtenir une carte de profondeur éparse de l'image de référence acquise à la première étape 101 à l'aide d'un algorithme de cartographie et de localisation simultanées ou algorithme SLAM (pour « Simultaneous Localisation and Mapping »).

Un exemple d'algorithme de cartographie et de localisation simultanées est décrit dans la publication « FastORB-SLAM: a Fast ORB-SLAM Method with Coarse-to-Fine Descriptor Independent Keypoint Matching » par Qiang Fu et al.

Pour calculer une carte de profondeur sur l'image de référence, l'algorithme SLAM utilise la succession d'images acquises à la première étape 101 par la caméra 201 mobile, ainsi que le déplacement de la caméra 201 pendant l'acquisition de la succession d'images par la caméra 201.

On entend par « carte de profondeur éparse », une carte de profondeur dans laquelle seulement certains pixels sont associés à une profondeur.

Dans la carte de profondeur éparse obtenue à la troisième étape 103, chaque pixel d'une pluralité de pixels est associé à une deuxième estimation de profondeur, aucune estimation de profondeur n'étant obtenue pour les autres pixels, c'est-à-dire pour les pixels n'appartenant pas à la pluralité de pixels.

La pluralité de pixels peut comporter tout ou partie des pixels de l'image de référence.

La deuxième estimation de profondeur est non métrique. Il existe donc un facteur d'échelle entre la distance non métrique de la deuxième estimation de profondeur et la distance métrique de la première estimation de profondeur.

La troisième étape 103 permet donc d'obtenir un vecteur ${D}_{slam}^{\left(t\right)}$ qui aux coordonnées x de chaque pixel de la pluralité de pixels associe une deuxième estimation de profondeur.

Une quatrième étape 104a, 104b, 104c du procédé 100 comporte trois alternatives de réalisation.

Pour pouvoir mettre en œuvre la première alternative de réalisation 104a ou la deuxième alternative de réalisation 104b de la quatrième étape 104, le système 200 peut ne pas comporter de centrale inertielle 203.

Pour pouvoir mettre en œuvre la troisième alternative de réalisation 104c de la quatrième étape 104, le système 200 comporte une centrale inertielle 203.

Dans la première alternative de réalisation 104a ou la deuxième alternative de réalisation 104b, la quatrième étape consiste à déterminer un modèle linéaire entre la carte de profondeur dense obtenue à la deuxième étape 102 et la carte de profondeur éparse obtenue à la troisième étape 103.

[Fig. 2] La figure 2 est un schéma synoptique illustrant l'enchaînement des étapes de la première alternative de réalisation de la quatrième étape 104a du procédé 100 selon l'invention.

Une première sous-étape 1041a de la première alternative de réalisation de la quatrième étape 104a consiste à estimer le facteur d'échelle entre la carte de profondeur dense obtenue à la deuxième étape 102 et la carte de profondeur éparse obtenue à la troisième étape 103.

Le facteur d'échelle est au moins estimé à partir de la première estimation de profondeur et de la deuxième estimation de profondeur associées à chaque pixel d'un ensemble de pixels sélectionné parmi la pluralité de pixels, c'est-à-dire à au moins une partie des pixels pour lesquels une deuxième estimation de profondeur a été obtenue à la troisième étape 103.

L'ensemble de pixels comporte par exemple q pixels tirés aléatoirement parmi la pluralité de pixels, ou q/R pixels tirés aléatoirement parmi les pixels de la pluralité de pixels localisés dans une région donnée de l'image de référence acquise à la première étape 101, pour chaque région de l'image, l'image comportant R régions. R est par exemple égal à 9.

Les régions sont par exemple uniformément réparties dans l'image de référence ou réparties sur les deux tiers inférieurs de l'image de référence.

q correspond par exemple à un nombre de pixels compris entre 20 à 50% du nombre de pixels de la pluralité de pixels.

L'ensemble de pixels peut également correspondre à la pluralité de pixels.

L'ensemble de pixels comporte par exemple les pixels de la pluralité de pixels répondant à une condition d'incertitude.

A la troisième étape 103, l'algorithme SLAM fournit également une incertitude sur la deuxième estimation de profondeur pour chaque pixel de la pluralité de pixels, c'est-à-dire un vecteur ${Σ}_{slam}^{\left(t\right)}$ qui aux coordonnées x de chaque pixel de la pluralité de pixels associe une incertitude sur la deuxième estimation de profondeur.

L'incertitude sur la deuxième estimation de profondeur est par exemple fournie en appliquant la méthode décrite dans la publication "Inverse depth parametrization for monocular SLAM ", par Civera, Javier, Andrew J. Davison, IEEE transactions on robotics 24.5 (2008): 932-945.

Pour un pixel donné, la condition d'incertitude dépend de l'incertitude sur la deuxième estimation de profondeur associée au pixel.

Un pixel de la pluralité de pixels répond par exemple à la condition d'incertitude s'il est associé à une incertitude sur la deuxième estimation de profondeur minimale ou si l'incertitude sur la deuxième estimation de profondeur associée au pixel est inférieure à un seuil d'incertitude. Le seuil d'incertitude vaut par exemple 0.2 mètre.

Dans un premier exemple de réalisation de l'invention, le facteur d'échelle est estimé uniquement à partir de la première estimation de profondeur et de la deuxième estimation de profondeur associées à chaque pixel de l'ensemble de pixels.

Dans ce cas, la première sous-étape 1041a revient à estimer le facteur d'échelle *α* qui minimise le critère suivant : ${min}_{α > 0} \left({\left‖{D}_{deep , ens}^{\left(t\right)}-α\times {D}_{slam , ens}^{\left(t\right)}\right‖}^{2}\right)$ Avec : ${D}_{deep , ens}^{\left(t\right)}$, un vecteur comportant la première estimation de profondeur pour chaque pixel de l'ensemble de pixels obtenue à la deuxième étape 102 et ${D}_{slam , ens}^{\left(t\right)}$, un vecteur comportant la deuxième estimation de profondeur pour chaque pixel de l'ensemble de pixels obtenue à la troisième étape 103.${D}_{deep , ens}^{\left(t\right)}$ correspond donc au vecteur ${D}_{deep}^{\left(t\right)}$ réduit aux pixels de l'ensemble de pixels, c'est-à-dire duquel les premières estimations de profondeur des pixels n'appartenant pas à l'ensemble de pixels ont été retirées, et ${D}_{slam , ens}^{\left(t\right)}$ correspond donc au vecteur ${D}_{slam}^{\left(t\right)}$ réduit aux pixels de l'ensemble de pixels, c'est-à-dire duquel les deuxièmes estimations de profondeur des pixels n'appartenant pas à l'ensemble de pixels ont été retirées.

Dans un deuxième exemple de réalisation de l'invention, le facteur d'échelle est estimé en outre à partir d'un historique d'estimations de profondeur comportant les premières estimations de profondeur et les deuxièmes estimations de profondeur obtenues pour au moins une image précédemment acquise par la caméra 201, c'est-à-dire une image acquise à un instant d'acquisition antérieur à l'instant d'acquisition t de l'image acquise à la première étape 101.

L'historique comporte par exemple les premières estimations de profondeur et les deuxièmes estimations de profondeur obtenues pour les k dernières images acquises par la caméra 201, c'est-à-dire pour les images acquises aux k instants d'acquisition précédant l'instant d'acquisition t.

Dans ce cas, la première sous-étape 1041a revient donc à estimer le facteur d'échelle *α* tel que : ${min}_{α > 0} \left({\left‖\left[{D}_{deep , ens}^{\left(t-k\right)} … {D}_{deep , ens}^{\left(t\right)}\right]-α.\left[{D}_{slam , ens}^{\left(t-k\right)} … {D}_{slam , ens}^{\left(t\right)}\right]\right‖}^{2}\right)$ Avec : ${D}_{deep , ens}^{\left(t-k\right)}$, un vecteur comportant la première estimation de profondeur pour chaque pixel de l'ensemble de pixels obtenue pour l'image acquise à l'instant t-k et ${D}_{slam , ens}^{\left(t-k\right)}$, un vecteur comportant la deuxième estimation de profondeur pour chaque pixel de l'ensemble de pixels obtenue pour l'image acquise à l'instant t-k.

Quel que soit l'exemple de réalisation, le facteur d'échelle est par exemple estimé de manière robuste par la méthode RANSAC, la méthode des moindres carrés itérativement pondérés, ou encore la méthode des M-estimateurs.

La première sous-étape 1041a permet donc d'obtenir un facteur d'échelle estimé *α̂*^{(*t*)}*.*

Une deuxième sous-étape 1042a de la première alternative de réalisation de la quatrième étape 104a consiste à calculer une erreur résiduelle pour chaque pixel de l'ensemble de pixels.

L'erreur résiduelle dépend du facteur d'échelle estimé à la première sous-étape 1041a et de la première estimation de profondeur et de la deuxième estimation de profondeur associées au pixel pour lequel l'erreur résiduelle est calculée.

L'erreur résiduelle *ε*^{(*t*)}(*x*) pour le pixel x est par exemple calculée de la manière suivante : ${E}^{\left(t\right)} \left(x\right) = \left|{D}_{deep}^{\left(t\right)}\left(x\right)-{\hat{α}}^{\left(t\right)}.{D}_{slam}^{\left(t\right)}\left(x\right)\right|$ Avec : ${D}_{deep}^{\left(t\right)} \left(x\right)$, la première estimation de profondeur pour le pixel x, ${D}_{slam}^{\left(t\right)} \left(x\right)$, la deuxième estimation de profondeur pour le pixel x et *α̂*^{(*t*)} le facteur d'échelle estimé à la première sous-étape 1041a.

Optionnellement, chaque erreur résiduelle calculée à la deuxième sous-étape 1042a est ensuite comparée à un premier seuil d'erreur prédéfini. Le premier seuil d'erreur vaut par exemple ratio x ${\overline{D}}_{slam}^{\left(t\right)}$ où ${\overline{D}}_{slam}^{\left(t\right)}$ représente la valeur moyenne des deuxièmes estimations de profondeur fournies par l'algorithme SLAM à la troisième étape 103 et ratio vaut entre 0,01 et 0,1.

Si le nombre de pixels de l'ensemble de pixels pour lesquels l'erreur résiduelle est supérieure au premier seuil d'erreur, divisé par le nombre de pixels de l'ensemble de pixels, c'est-à-dire le rapport entre le nombre de pixels de l'ensemble de pixels pour lesquels l'erreur résiduelle est supérieure à un premier seuil d'erreur, et le nombre de pixels de l'ensemble de pixels, est supérieur à un premier seuil d'aberration, une première condition C1a est vérifiée et une étape 1047 d'arrêt du procédé 100 est réalisée. Sinon, une troisième sous-étape 1043a et une quatrième sous-étape 1044a de la première alternative de réalisation de la quatrième étape 104a est réalisée.

Le premier seuil d'aberration vaut par exemple 0.55.

Dans le cas où l'étape 1047 d'arrêt du procédé 100 est réalisée, une mesure de fiabilité minimale est affectée à chaque pixel de l'image de référence.

Par exemple, si les valeurs possibles pour la mesure de fiabilité sont comprises entre -1 et 1, une mesure de fiabilité égale à -1 est affectée à chaque pixel de l'image de référence lors de l'étape 1047 d'arrêt du procédé.

La troisième sous-étape 1043a de la première alternative de réalisation de la quatrième étape 104a consiste à calculer la moyenne des erreurs résiduelles calculées à la deuxième sous-étape 1042a inférieures au premier seuil d'erreur.

La quatrième sous-étape 1044a de la première alternative de réalisation de la quatrième étape 104a consiste à réaliser un test de normalité sur les erreurs résiduelles calculées à la deuxième sous-étape 1042a inférieures au premier seuil d'erreur.

On entend par « réalisation d'un test de normalité sur des données », la réalisation d'un test permettant de vérifier si les données suivent une loi normale ou non.

Le test de normalité utilisé est par exemple le test de D'Agostino - Pearson basé sur les mesures d'asymétrie, ou skewness en anglais, et les mesures d'aplatissement, ou kurtosis en anglais.

Si la valeur absolue de la moyenne calculée à la troisième sous-étape 1043a est supérieure à un premier seuil de moyenne ou si le test de normalité réalisé à la quatrième sous-étape 1044a est négatif, c'est-à-dire si les erreurs résiduelles inférieures au premier seuil d'erreur ne suivent pas une loi normale, une deuxième condition C2a est vérifiée et l'étape 1047 d'arrêt du procédé 100 est réalisée, c'est-à-dire qu'une mesure de fiabilité minimale est affectée à chaque pixel de l'image de référence. Sinon, une cinquième étape 105 du procédé 100 est réalisée.

Le premier seuil de moyenne vaut par exemple 0.1.

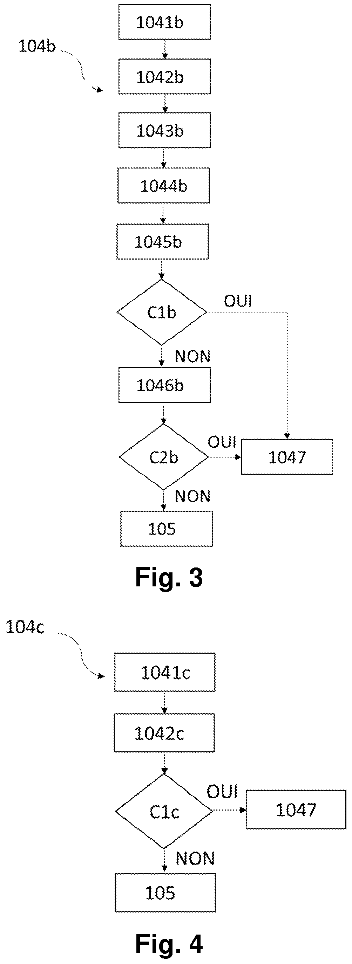

[Fig. 3] La figure 3 est un schéma synoptique illustrant l'enchaînement des étapes de la deuxième alternative de réalisation de la quatrième étape 104b du procédé 100 selon l'invention.

Une première sous-étape 1041b, une deuxième sous-étape 1042b, une troisième sous-étape 1043b et une quatrième sous-étape 1044b de la deuxième alternative de réalisation de la quatrième étape 104b sont réalisées pour chaque itération d'un ensemble d'itérations comportant une pluralité d'itérations, c'est-à-dire une pluralité de fois.

Le nombre d'itérations de l'ensemble d'itérations est par exemple égal à 10.

La première sous-étape 1041b consiste à diviser les pixels d'un ensemble de pixels sélectionné parmi la pluralité de pixels en un premier échantillon et un deuxième échantillon.

La division est par exemple aléatoire ou dépend de l'incertitude sur la deuxième estimation de profondeur associée aux pixels.

L'ensemble de pixels est par exemple déterminé comme décrit ci-dessus pour la première sous-étape 1041a de la première alternative de réalisation de la quatrième étape 104a. Dans le cas où il est déterminé par tirage aléatoire, q correspond par exemple à un nombre de pixels compris entre 10 à 20% du nombre de pixels de la pluralité de pixels.

La deuxième sous-étape 1042b consiste à estimer le facteur d'échelle entre la carte de profondeur dense obtenue à la deuxième étape 102 et la carte de profondeur éparse obtenue à la troisième étape 103.

Le facteur d'échelle est estimé à partir de la première estimation de profondeur et de la deuxième estimation de profondeur associées à chaque pixel du premier échantillon.

La deuxième sous-étape 1042b revient à estimer le facteur d'échelle *α* tel que : ${min}_{α > 0} \left({\left‖{D}_{deep , ech 1}^{\left(t\right)}-α\times {D}_{slam , ech 1}^{\left(t\right)}\right‖}^{2}\right)$ Avec : ${D}_{deep , ech 1}^{\left(t\right)}$, un vecteur comportant la première estimation de profondeur pour chaque pixel du premier échantillon et ${D}_{slam , ech 1}^{\left(t\right)}$, un vecteur comportant la deuxième estimation de profondeur pour chaque pixel du premier échantillon.${D}_{deep , ech 1}^{\left(t\right)}$ correspond donc au vecteur ${D}_{deep}^{\left(t\right)}$ réduit aux pixels du premier échantillon, c'est-à-dire duquel les premières estimations de profondeur des pixels n'appartenant pas au premier échantillon ont été retirées, et ${D}_{slam , ech 1}^{\left(t\right)}$ correspond donc au vecteur ${D}_{slam}^{\left(t\right)}$ réduit aux pixels du premier échantillon, c'est-à-dire duquel les deuxièmes estimations de profondeur des pixels n'appartenant pas au premier échantillon ont été retirées

Le facteur d'échelle est par exemple estimé de manière robuste par la méthode RANSAC, la méthode des moindres carrés itérativement pondérés, ou encore la méthode des M-estimateurs.

La troisième sous-étape 1043b consiste à calculer une erreur résiduelle pour chaque pixel du deuxième échantillon.

L'erreur résiduelle dépend du facteur d'échelle estimé à la deuxième sous-étape 1042b et de la première estimation de profondeur et de la deuxième estimation de profondeur associées au pixel pour lequel l'erreur résiduelle est calculée.

L'erreur résiduelle *ε*^{(*t*)}(*x*) pour le pixel x est par exemple calculée de la manière suivante : ${E}^{\left(t\right)} \left(x\right) = \left|{D}_{deep}^{\left(t\right)}\left(x\right)-{\hat{α}}^{\left(t\right)}.{D}_{slam}^{\left(t\right)}\left(x\right)\right|$ Avec : ${D}_{deep}^{\left(t\right)} \left(x\right)$, la première estimation de profondeur pour le pixel x, ${D}_{slam}^{\left(t\right)} \left(x\right)$, la deuxième estimation de profondeur pour le pixel x et *α̂*^{(*t*)} le facteur d'échelle estimée à la deuxième sous-étape 1042b.

Chaque erreur résiduelle calculée à la troisième sous-étape 1043b est ensuite comparée à un deuxième seuil d'erreur prédéfini. Le deuxième seuil d'erreur vaut par exemple 0.5.

La quatrième sous-étape 1044b consiste à calculer la valeur moyenne des erreurs résiduelles calculées à la troisième sous-étape 1043b inférieures au deuxième seuil d'erreur.

Une cinquième sous-étape 1045b de la deuxième alternative de réalisation de la quatrième étape 104b est réalisée dès que les première sous-étape 1041b, deuxième sous-étape 1042b, troisième sous-étape 1043b et quatrième sous-étape 1044b ont été réalisées pour chaque itération de l'ensemble d'itérations.

La cinquième sous-étape 1045b consiste à calculer la variance des facteurs d'échelle estimés à la deuxième sous-étape 1042b sur l'ensemble d'itérations.

Si la variance calculée à la cinquième sous-étape 1045b est supérieure à un premier seuil de variance, une première condition C1b est vérifiée et l'étape 1047 d'arrêt du procédé 100 est réalisée. Sinon, une sixième sous-étape 1046b de la deuxième alternative de réalisation de la quatrième étape 104b est réalisée.

Le premier seuil de variance vaut par exemple 0.2.

La sixième sous-étape 1046b consiste à calculer la moyenne et la variance des valeurs moyennes calculées à la quatrième sous-étape 1044b sur l'ensemble d'itérations.

Si la moyenne calculée à la sixième sous-étape 104b est supérieure à un deuxième seuil de moyenne ou si la variance calculée à la sixième sous-étape 104b est supérieure à un deuxième seuil de variance, une deuxième condition C2b est vérifiée et l'étape 1047 d'arrêt du procédé 100 est réalisée. Sinon, la cinquième étape 105 du procédé 100 est réalisée.

Le deuxième seuil de moyenne vaut par exemple 0.1.

Le deuxième seuil de variance vaut par exemple 0.2.

[Fig. 4] La figure 4 est un schéma synoptique illustrant l'enchaînement des étapes de la troisième alternative de réalisation de la quatrième étape 104c du procédé 100 selon l'invention.

Une première sous-étape 1041c de la troisième alternative de réalisation de la quatrième étape 104c consiste à obtenir une carte de profondeur éparse métrique en fusionnant la carte de profondeur éparse et des données issues de la centrale inertielle 203.

La première sous-étape 1041c est par exemple réalisée par la technique décrite dans la publication "Fusion of IMU and vision for absolute scale estimation in monocular SLAM", par Nützi, Gabriel, et al, Journal of intelligent & robotic systems 61.1-4 (2011): 287-299.

Dans la carte de profondeur éparse métrique obtenue à la première sous-étape 1041c, chaque pixel de la pluralité de pixels est associé à une deuxième estimation de profondeur métrique.

La première sous-étape 1041c permet donc d'obtenir un vecteur ${D}_{slam , met}^{\left(t\right)}$ qui aux coordonnées x de chaque pixel de la pluralité de pixels associe une deuxième estimation de profondeur métrique.

Une deuxième sous-étape 1042c de la troisième alternative de réalisation de la quatrième étape 104c consiste à calculer une erreur résiduelle pour chaque pixel d'un ensemble de pixels sélectionné parmi la pluralité de pixels à partir de la première estimation de profondeur et de la deuxième estimation de profondeur métrique associées au pixel.

L'ensemble de pixels est par exemple déterminé comme décrit ci-dessus pour la première sous-étape 1041a de la première alternative de réalisation de la quatrième étape 104a. Dans le cas où il est déterminé par tirage aléatoire, q correspond par exemple à un nombre de pixels compris entre 10 à 20% du nombre de pixels de la pluralité de pixels.

L'erreur résiduelle *ε*^{(*t*)}(*x*) pour le pixel x est par exemple calculée de la manière suivante : ${E}^{\left(t\right)} \left(x\right) = \left|{D}_{deep}^{\left(t\right)}\left(x\right)-{D}_{slam , met}^{\left(t\right)}\left(x\right)\right|$ Avec : ${D}_{deep}^{\left(t\right)} \left(x\right)$, la première estimation de profondeur pour le pixel x et ${D}_{slam , met}^{\left(t\right)} \left(x\right)$, la deuxième estimation de profondeur métrique pour le pixel x.

Chaque erreur résiduelle calculée à la deuxième sous-étape 1042c est ensuite comparée à un troisième seuil d'erreur prédéfini. Le troisième seuil d'erreur vaut par exemple 0.5

Si le nombre de pixels de l'ensemble de pixels pour lesquels l'erreur résiduelle est supérieure au troisième seuil d'erreur, divisé par le nombre de pixels de l'ensemble de pixels, c'est-à-dire le rapport entre le nombre de pixels de l'ensemble de pixels pour lesquels l'erreur résiduelle est supérieure à un troisième seuil d'erreur, et le nombre de pixels de l'ensemble de pixels, est supérieur à un deuxième seuil d'aberration, une première condition C1c est vérifiée et l'étape 1047 d'arrêt du procédé 100 est réalisée. Sinon, la cinquième étape 105 du procédé 100 est réalisée.

Le deuxième seuil d'aberration vaut par exemple 0.55.

La cinquième étape 105 consiste à calculer pour chaque pixel, une mesure de fiabilité de la première estimation de profondeur associée au pixel, à partir de la carte de profondeur dense obtenue à la deuxième étape 102 et de la carte de profondeur éparse obtenue à la troisième étape 103.

[Fig. 5] La figure 5 est un schéma synoptique illustrant l'enchaînement des étapes de la cinquième étape 105 du procédé 100 selon l'invention.

Une première sous-étape 1051 consiste à calculer une erreur résiduelle pour chaque pixel de la pluralité de pixels.

Quand la première alternative de réalisation 104a ou la deuxième alternative de réalisation 104b de la quatrième étape 104 a été réalisée, l'erreur résiduelle est calculée à partir du facteur d'échelle estimé et de la première estimation de profondeur et de la deuxième estimation de profondeur associées au pixel.

L'erreur résiduelle *ε*^{(*t*)}(*x*) pour le pixel x de la pluralité de pixels est par exemple calculée de la manière suivante : ${E}^{\left(t\right)} \left(x\right) = \left|{D}_{deep}^{\left(t\right)}\left(x\right)-{\hat{α}}^{\left(t\right)}.{D}_{slam}^{\left(t\right)}\left(x\right)\right|$ Avec : ${D}_{deep}^{\left(t\right)} \left(x\right)$, la première estimation de profondeur pour le pixel x, ${D}_{slam}^{\left(t\right)} \left(x\right)$, la deuxième estimation de profondeur pour le pixel x et *α̂*^{(*t*)} le facteur d'échelle estimé.

Le facteur d'échelle estimé pour la deuxième alternative de réalisation de la quatrième étape 104b du procédé 100 selon l'invention correspond à la moyenne des facteurs d'échelle estimés à la deuxième sous-étape 1042b sur l'ensemble d'itérations.

Quand la troisième alternative de réalisation 104c de la quatrième étape 104 a été réalisée, l'erreur résiduelle est calculée à partir de la première estimation de profondeur et de la deuxième estimation de profondeur métrique associées au pixel.

L'erreur résiduelle *ε*^{(*t*)}(*x*) pour le pixel x de la pluralité de pixels est par exemple calculée de la manière suivante : ${E}^{\left(t\right)} \left(x\right) = \left|{D}_{deep}^{\left(t\right)}\left(x\right)-{D}_{slam , met}^{\left(t\right)}\left(x\right)\right|$ Avec : ${D}_{deep}^{\left(t\right)} \left(x\right)$, la première estimation de profondeur pour le pixel x et ${D}_{slam , met}^{\left(t\right)} \left(x\right)$, la deuxième estimation de profondeur métrique pour le pixel x.

Une deuxième sous-étape 1052 consiste à calculer une mesure de cohérence pour chaque pixel de la pluralité de pixels.

La mesure de cohérence est calculée à partir de l'erreur résiduelle et éventuellement de l'incertitude sur la deuxième estimation de profondeur associées au pixel.

La mesure de cohérence *Coher*^{(*t*)} pour le pixel xᵢ de la pluralité de pixels peut se calculer de la manière suivante : ${Coher}^{\left(t\right)} \left({x}_{i}\right) = \frac{1}{1 + {\left(β.{E}^{\left(t\right)}\left({x}_{i}\right)\right)}^{2}}$ Avec : *ε*^{(*t*)}(*xᵢ*), l'erreur résiduelle associée au pixel xi de la pluralité de pixels.

La mesure de cohérence *Coher*^{(*t*)} pour le pixel xᵢ de la pluralité de pixels peut également se calculer de la manière suivante : ${Coher}^{\left(t\right)} \left({x}_{i}\right) = \frac{1}{1 + {\left(β.{E}^{\left(t\right)}\left({x}_{i}\right)\right)}^{2}} . Conf \left({x}_{i}\right)$ Avec : ${Conf}^{\left(t\right)} \left({x}_{i}\right) = \frac{1}{1 + {\sum }_{slam}^{\left(t\right)} \left({x}_{i}\right)}$ Avec : ${\sum }_{slam}^{\left(t\right)} \left({x}_{i}\right)$, l'incertitude sur la deuxième estimation de profondeur associée au pixel xi de la pluralité de pixels.

Une troisième sous-étape 1053 consiste à obtenir une mesure de cohérence pour chaque pixel n'appartenant pas à la pluralité de pixels par interpolation à partir des mesures de cohérences associées aux pixels de la pluralité de pixels calculées à la deuxième sous-étape 1052.

La mesure de cohérence *Coher*^{(*t*)}(*x*) pour un pixel x n'appartenant pas à la pluralité de pixels est par exemple calculée de la manière suivante : ${Coher}^{\left(t\right)} \left(x\right) = \frac{1}{N} {\sum }_{i = 1}^{N} {Coher}^{\left(t\right)} \left({x}_{i}\right) . φ \left(\left‖x-{x}_{i}\right‖\right)$ Avec : xᵢ un pixel appartenant à la pluralité de pixels, *φ*, une fonction de base radiale, par exemple gaussienne, linéaire, polynomiale, ou multi-quadratique et N le nombre de pixels de la pluralité de pixels.

Si une segmentation sémantique de l'image de référence est connue, la mesure de cohérence *Coher*^{(*t*)}(*x*) pour un pixel x n'appartenant pas à la pluralité de pixels est par exemple calculée de la manière suivante : ${Coher}^{\left(t\right)} \left(x\right) = \frac{1}{N} {\sum }_{i = 1}^{N} {Coher}^{\left(t\right)} \left({x}_{i}\right) . C \left(x, {x}_{i}\right) . φ \left(\left‖x-{x}_{i}\right‖\right)$ Avec : $\begin{matrix}C \left(x, {x}_{i}\right) = 1 , si classe \left(x\right) = classe \left({x}_{i}\right) \\ = 0 sinon\end{matrix}$

Une quatrième sous-étape 1054 de la cinquième étape 105 consiste à obtenir une mesure de fiabilité pour chaque pixel de l'image de référence.

La mesure de fiabilité dépend de la mesure de cohérence et de l'incertitude sur la deuxième estimation de profondeur associées au pixel.

La mesure de fiabilité *Fiab*^{(*t*)} pour le pixel x se calcule par exemple de la manière suivante : $\begin{matrix}{Fiab}^{\left(t\right)} \left(x\right) = {Coher}^{\left(t\right)} \left(x\right) si {Conf}^{\left(t\right)} \left(x\right) \geq 0 \\ = - 1 sinon .\end{matrix}$

Le procédé 100 selon l'invention peut comporter en outre une sixième étape 106 consistant à calculer, pour chaque pixel de l'image de référence, une mesure de densité liée au nombre de pixels de la pluralité de pixels impliqués dans le calcul de la mesure de fiabilité associée au pixel obtenue à la cinquième étape 105.

La sixième étape 106 comporte une première sous-étape 1061 consistant à affecter une mesure de densité maximale à chaque pixel de la pluralité de pixels.

La mesure de densité maximale est par exemple égale à 100.

La sixième étape 106 comporte une deuxième sous-étape 1062 consistant à obtenir une mesure de densité pour chaque pixel n'appartenant pas à la pluralité de pixels, par interpolation à partir des mesures de densité associées aux pixels de la pluralité de pixels obtenues à la première sous-étape 1061.

La mesure de densité I^{(t)}(x) pour un pixel x n'appartenant pas à la pluralité de pixels est par exemple calculée de la manière suivante : ${I}^{\left(t\right)} \left(x\right) = {\sum }_{i = 1}^{N} w . {w}_{i} . {I}^{\left(t\right)} \left({x}_{i}\right) . φ \left(\left‖x-{x}_{i}\right‖\right)$ Avec : xᵢ un pixel appartenant à la pluralité de pixels, *φ*, une fonction de base radiale, par exemple gaussienne, linéaire, polynomiale, ou multi-quadratique, *wᵢ* des paramètres à déterminer dépendant de la fonction *φ*, N le nombre de pixels de la pluralité de pixels et w un coefficient.

w vaut par exemple 1/N.

Les paramètres *wᵢ* sont par exemple déterminés par la méthode décrite dans la publication "A Krylov subspace algorithm for multiquadric interpolation in many dimensions.", par Faul, A. C., G. Goodsell, and M. J. D. Powell, IMA Journal of Numerical Analysis 25.1 (2005): 1-24.

Si une segmentation sémantique de l'image de référence est connue, la mesure de densité I^{(t)}(x) pour un pixel x n'appartenant pas à la pluralité de pixels est par exemple calculée de la manière suivante : ${I}^{\left(t\right)} \left(x\right) = {\sum }_{i = 1}^{N} w . {w}_{i} . {I}^{\left(t\right)} \left({x}_{i}\right) . C \left(x, {x}_{i}\right) . φ \left(\left‖x-{x}_{i}\right‖\right)$ Avec : $\begin{matrix}C \left(x, {x}_{i}\right) = 1 , si classe \left(x\right) = classe \left({x}_{i}\right) \\ = 0 sinon\end{matrix}$

## Revendications

1. Procédé impléménté sur ordinateur (100) d'estimation d'une mesure de fiabilité d'une estimation de distance métrique entre une caméra (201) mobile et chaque point d'un environnement imagé par la caméra (201), comprenant les étapes suivantes :
- Acquisition d'une succession d'images de l'environnement par la caméra (201), la succession d'images comprenant une image de référence, chaque pixel de l'image de référence correspondant à un point de l'environnement (101) ;
- Utilisation d'un algorithme d'inférence de profondeur sur l'image de référence pour obtenir une carte de profondeur dense associant une première estimation de profondeur à chaque pixel de l'image de référence, la profondeur correspondant à une distance entre la caméra et le point représenté sur le pixel (102) ;
- Utilisation d'un algorithme de cartographie et de localisation simultanées sur la succession d'images acquises par la caméra (201) mobile, pour obtenir une carte de profondeur éparse associant une deuxième estimation de profondeur à chaque pixel d'une pluralité de pixels de l'image de référence (103) ;
- Détermination d'un modèle linéaire entre la carte de profondeur dense et la carte de profondeur éparse (104a) comportant les sous-étapes suivantes :
∘ Estimation d'un facteur d'échelle entre la carte de profondeur dense et la carte de profondeur éparse à partir de la première estimation de profondeur et de la deuxième estimation de profondeur associées à chaque pixel d'un ensemble de pixels sélectionné parmi la pluralité de pixels (1041a) ;
∘ Pour chaque pixel de l'ensemble de pixels, calcul d'une erreur résiduelle entre la première estimation de profondeur associée au pixel et la deuxième estimation de profondeur associée au pixel, ladite deuxième estimation de profondeur associée au pixel étant pondérée par le facteur d'échelle estimé (1042a);
∘ Calcul de la moyenne des erreurs résiduelles inférieures à un premier seuil d'erreur (1043a) ;
∘ Réalisation d'un test de normalité sur les erreurs résiduelles inférieures au premier seuil d'erreur (1044a) ;
∘ Si la valeur absolue de la moyenne est supérieure à un premier seuil de moyenne ou si le test de normalité est négatif (C2a), arrêt du procédé et affectation d'une mesure de fiabilité minimale à chaque pixel de l'image de référence (1047) ;
∘ Sinon, pour chaque pixel de l'image de référence, calcul d'une mesure de fiabilité de la première estimation de profondeur associée au pixel, à partir de la carte de profondeur dense et de la carte de profondeur éparse (105).

2. Procédé (100) selon la revendication 1, dans lequel l'étape (1041a) d'estimation du facteur d'échelle est réalisée en outre à partir d'un historique d'estimations de profondeur comportant les premières estimations de profondeur et les deuxièmes estimations de profondeur obtenues pour au moins une image précédemment acquise par la caméra (201).

3. Procédé (100) selon la revendication 1 ou 2, dans lequel l'étape (104a) de détermination d'un modèle linéaire comporte en outre, si le rapport entre le nombre de pixels pour lesquels l'erreur résiduelle est supérieure au premier seuil d'erreur, et le nombre de pixels de l'ensemble de pixels est supérieur à un premier seuil d'aberration (C1a), une étape d'arrêt du procédé et d'affectation d'une mesure de fiabilité minimale à chaque pixel de l'image de référence (1047).

4. Procédé (100) selon l'une quelconque des revendications précédentes, dans lequel l'ensemble de pixels est sélectionné par tirage aléatoire parmi la pluralité de pixels de l'image de référence ou par tirage aléatoire parmi la pluralité de pixels dans une région de l'image de référence pour chaque région de l'image de référence.

5. Procédé (100) selon l'une quelconque des revendications 1 à 3, dans lequel l'algorithme de cartographie et de localisation simultanées fournit en outre, pour chaque pixel de la pluralité de pixels, une incertitude sur la deuxième estimation de profondeur et l'ensemble de pixels est sélectionné parmi les pixels de la pluralité de pixels répondant à une condition d'incertitude dépendant de l'incertitude sur la deuxième estimation de profondeur associée au pixel.

6. Procédé (100) selon l'une quelconque des revendications précédentes, dans lequel l'algorithme de cartographie et de localisation simultanées fournit en outre, pour chaque pixel de la pluralité de pixels, une incertitude sur la deuxième estimation de profondeur et l'étape (105) de calcul de la mesure de fiabilité comporte les sous-étapes suivantes :
- Pour chaque pixel de la pluralité de pixels, calcul d'une erreur résiduelle entre la première estimation de profondeur associée au pixel et la deuxième estimation de profondeur associée au pixel, ladite deuxième estimation de profondeur associée au pixel étant pondérée par le facteur d'échelle estimé, ou entre la première estimation de profondeur associée au pixel et la deuxième estimation de profondeur associée au pixel, rendue métrique en la multipliant par le facteur d'échelle estimé (1051) ;
- Pour chaque pixel de la pluralité de pixels, calcul, à partir de l'erreur résiduelle associée au pixel, d'une mesure de cohérence associée au pixel, (1052) ;
- Pour chaque pixel n'appartenant pas à la pluralité de pixels, association d'une mesure de cohérence par interpolation à partir des mesures de cohérence associées aux pixels de la pluralité de pixels (1053) ;
- Pour chaque pixel de l'image de référence, calcul d'une mesure de fiabilité dépendant de la mesure de cohérence et de l'incertitude sur la deuxième estimation de profondeur associées au pixel (1054).

7. Procédé (100) selon l'une quelconque des revendications précédentes, qui comporte en outre une étape (106) de calcul, pour chaque pixel de l'image de référence, d'une mesure de densité, comportant les sous-étapes suivantes :
- Pour chaque pixel de la pluralité de pixels, association d'une mesure de densité maximale (1061) ;
- Pour chaque pixel n'appartenant pas à la pluralité de pixels, affectation d'une mesure de densité par interpolation à partir des mesures de densité associées aux pixels de la pluralité de pixels (1062).

8. Procédé de commande d'un robot mobile ou d'un véhicule mobile comprenant les étapes du procédé (100) d'estimation selon l'une quelconque des revendications précédentes.

9. Système (200) pour la mise en œuvre du procédé (100) d'estimation selon l'une quelconque des revendications 1 à 7 ou du procédé de commande selon la revendication 8, comportant une caméra (201) et un calculateur (202).

10. Système (200) selon la revendication 9, **caractérisé en ce qu'**il comporte en outre une centrale inertielle (203).

11. Produit-programme d'ordinateur comprenant des instructions qui, quand le programme est exécuté sur un ordinateur, conduisent celui-ci à mettre en œuvre les étapes du procédé (100) d'estimation selon l'une quelconque des revendications 1 à 7 ou du procédé de commande selon la revendication 8.

## Patentansprüche

1. Auf einem Computer (100) implementiertes Verfahren zur Schätzung eines Zuverlässigkeitsmaßes einer metrischen Entfernungsschätzung zwischen einer beweglichen Kamera (201) und jedem Punkt einer von der Kamera (201) abgebildeten Umgebung, mit den folgenden Schritten:
- Erfassen einer Bildfolge der Umgebung durch die Kamera (201), wobei die Bildfolge ein Referenzbild umfasst und jedes Pixel des Referenzbildes einem Punkt der Umgebung (101) entspricht;
- Anwendung eines Tiefenfolgerungsalgorithmus auf das Referenzbild, um eine dichte Tiefenkarte zu erhalten, die jedem Pixel des Referenzbildes eine erste Tiefenschätzung zuordnet, wobei die Tiefe einem Abstand zwischen der Kamera und dem auf dem Pixel dargestellten Punkt (102) entspricht;
- Verwendung eines Algorithmus zur simultanen Kartierung und Lokalisierung auf die von der beweglichen Kamera (201) aufgenommene Bildfolge, um eine spärliche Tiefenkarte zu erhalten, die jedem Pixel einer Vielzahl von Pixeln des Referenzbildes eine zweite Tiefenschätzung zuordnet (103);
- Bestimmung eines linearen Modells zwischen der dichten Tiefenkarte und der spärlichen Tiefenkarte (104a) mit den folgenden Teilschritten:
∘ Schätzung eines Skalierungsfaktors zwischen der dichten Tiefenkarte und der spärlichen Tiefenkarte anhand der ersten Tiefenschätzung und der zweiten Tiefenschätzung, die jedem Pixel einer aus der Vielzahl von Pixeln ausgewählten Pixelgruppe zugeordnet sind (1041a);
∘ Für jedes Pixel der Pixelgruppe Berechnung eines Restfehlers zwischen der dem Pixel zugeordneten ersten Tiefenschätzung und der dem Pixel zugeordneten zweiten Tiefenschätzung, wobei die dem Pixel zugeordnete zweite Tiefenschätzung durch den geschätzten Skalierungsfaktor (1042a) gewichtet wird;
∘ Berechnung des Mittelwerts der Restfehler, die unter einem ersten Fehlerschwellenwert (1043a) liegen;
∘ Durchführung eines Normalitätstests für die Restfehler, die unterhalb des ersten Fehlerschwellenwerts (1044a) liegen;
∘ Wenn der Absolutwert des Mittelwerts einen ersten Schwellenwert des Mittelwerts überschreitet oder wenn der Normalitätstest negativ ausfällt (C2a), wird der Vorgang abgebrochen und jedem Pixel des Referenzbildes ein Mindestzuverlässigkeitsmaß zugewiesen (1047);
∘ Andernfalls Berechnung eines Zuverlässigkeitsmaßes für die dem jeweiligen Pixel zugeordnete erste Tiefenschätzung für jedes Pixel des Referenzbildes anhand der dichten Tiefenkarte und der spärlichen Tiefenkarte (105).

2. Verfahren (100) nach Anspruch 1, bei dem
der Schritt (1041a) zur Schätzung des Skalierungsfaktors zusätzlich anhand einer Historie von Tiefenschätzungen durchgeführt wird, die die ersten Tiefenschätzungen und die zweiten Tiefenschätzungen umfasst, die für mindestens ein zuvor von der Kamera (201) aufgenommenes Bild erhalten wurden.

3. Verfahren (100) nach Anspruch 1 oder 2, bei dem
der Schritt (104a) zur Bestimmung eines linearen Modells, wenn das Verhältnis zwischen der Anzahl der Pixel, für die der Restfehler größer als der erste Fehlerschwellenwert ist, und der Anzahl der Pixel der Pixelgruppe größer als ein erster Aberrationsschwellenwert (C1a) ist, außerdem einen Schritt zum Beenden des Verfahrens und zum Zuweisen eines minimalen Zuverlässigkeitsmaßes zu jedem Pixel des Referenzbildes (1047) umfasst.

4. Verfahren (100) nach einem der vorstehenden Ansprüche, bei dem die Pixelgruppe durch Zufallsauswahl aus der Vielzahl von Pixeln des Referenzbildes oder durch Zufallsauswahl aus der Vielzahl von Pixeln in einem Bereich des Referenzbildes für jeden Bereich des Referenzbildes ausgewählt wird.

5. Verfahren (100) nach einem der Ansprüche 1 bis 3, bei dem der Algorithmus zur gleichzeitigen Kartierung und Lokalisierung ferner für jedes Pixel der Vielzahl von Pixeln eine Unsicherheit bezüglich der zweiten Tiefenschätzung liefert und die Pixelgruppe aus den Pixeln der Vielzahl von Pixeln ausgewählt wird, die eine von der dem Pixel zugeordneten Unsicherheit bezüglich der zweiten Tiefenschätzung abhängige Unsicherheitsbedingung erfüllen.

6. Verfahren (100) nach einem der vorstehenden Ansprüche, bei dem der Algorithmus zur gleichzeitigen Kartierung und Lokalisierung für jedes Pixel der Vielzahl von Pixeln zusätzlich eine Unsicherheit bezüglich der zweiten Tiefenschätzung liefert und der Schritt (105) zur Berechnung des Zuverlässigkeitsmaßes die folgenden Teilschritte umfasst:
- Für jedes Pixel der Vielzahl von Pixeln Berechnung eines Restfehlers zwischen der ersten, dem Pixel zugeordneten Tiefenschätzung und der zweiten, dem Pixel zugeordneten Tiefenschätzung, wobei die dem Pixel zugeordnete zweite Tiefenschätzung mit dem geschätzten Skalierungsfaktor gewichtet wird, oder zwischen der dem Pixel zugeordneten ersten Tiefenschätzung und der dem Pixel zugeordneten zweiten Tiefenschätzung, die durch Multiplikation mit dem geschätzten Skalierungsfaktor in eine metrische Größe umgewandelt wird (1051);
- Für jedes Pixel der Vielzahl von Pixeln Berechnung eines dem Pixel zugeordneten Kohärenzmaßes aus dem dem Pixel zugeordneten Restfehler (1052);
- Für jedes Pixel, das nicht zu der Vielzahl von Pixeln gehört, Zuordnung eines Kohärenzmaßes durch Interpolation aus den Kohärenzmaßen, die den Pixeln der Vielzahl von Pixeln zugeordnet sind (1053);
- Für jedes Pixel des Referenzbildes Berechnung eines Zuverlässigkeitsmaßes in Abhängigkeit von dem Kohärenzmaß und der Unsicherheit bezüglich der zweiten Tiefenschätzung, die dem Pixel zugeordnet sind (1054).

7. Verfahren (100) nach einem der vorstehenden Ansprüche, das ferner einen Schritt (106) umfasst, bei dem für jedes Pixel des Referenzbildes ein Dichtemaß berechnet wird, der die folgenden Teilschritte umfasst:
- Für jedes Pixel der Vielzahl von Pixeln Zuordnung eines maximalen Dichtemaßes (1061);
- Für jedes Pixel, das nicht zu der Vielzahl von Pixeln gehört, Zuweisung eines Dichtemaßes durch Interpolation aus den den Pixeln der Vielzahl von Pixeln zugeordneten Dichtemaßen (1062).

8. Verfahren zur Steuerung eines mobilen Roboters oder eines mobilen Fahrzeugs, das die Verfahrensschritte (100) der Schätzung nach einem der vorstehenden Ansprüche umfasst.

9. System (200) zur Durchführung des Schätzverfahrens (100) nach einem der Ansprüche 1 bis 7 oder des Steuerungsverfahrens nach Anspruch 8, mit einer Kamera (201) und einem Rechner (202).

10. System (200) nach Anspruch 9, **dadurch gekennzeichnet, dass** es ferner ein Trägheitsnavigationssystem (203) umfasst.

11. Computerprogrammprodukt, das Befehle umfasst, die, wenn das Programm auf einem Computer ausgeführt wird, diesen veranlassen, die Schritte des Schätzverfahrens (100) nach einem der Ansprüche 1 bis 7 oder des Steuerungsverfahrens nach Anspruch 8 durchzuführen.

## Claims

1. A computer implemented method (100) for estimating a measure of reliability of a metric distance estimate between a moving camera (201) and each point of an environment imaged by the camera (201), comprising the following steps of:
- Acquiring a succession of images of the environment by the camera (201), the succession of images comprising a reference image, each pixel of the reference image corresponding to a point of the environment (101);
- Using a depth inference algorithm on the reference image to obtain a dense depth map associating a first depth estimate with each pixel of the reference image, the depth corresponding to a distance between the camera and the point represented on the pixel (102);
- Using a simultaneous localisation and mapping algorithm on the succession of images acquired by the moving camera (201), to obtain a sparse depth map associating a second depth estimate with each pixel of a plurality of pixels of the reference image (103);
- Determining a linear model between the dense depth map and the sparse depth map (104a) including the following sub-steps of:
∘ Estimating a scale factor between the dense depth map and the sparse depth map from the first depth estimate and the second depth estimate associated with each pixel of a set of pixels selected from the plurality of pixels (1041a);
∘ For each pixel of the set of pixels, calculating a residual error between the first depth estimate associated with the pixel and the second depth estimate associated with the pixel (1042a), said second depth estimate associated with the pixel being weighted by the estimated scale factor;
∘ Calculating the mean of the residual errors below a first error threshold (1043a);
∘ Performing a normality test on the residual errors below the first error threshold (1044a);
∘ If the absolute value of the mean is greater than a first mean threshold or if the normality test is negative (C2a), stopping the method and assigning a measure of minimum reliability to each pixel of the reference image (1047);
- Otherwise, for each pixel of the reference image, calculating a measure of reliability of the first depth estimate associated with the pixel, from the dense depth map and the sparse depth map (105).

2. The method (100) according to Claim 1, wherein the step (1041a) of estimating the scale factor is further performed from a history of depth estimates including the first depth estimates and the second depth estimates obtained for at least one image previously acquired by the camera (201).

3. The method (100) according to claim 1 or 2, wherein the step (104a) of determining a linear model further includes, if the ratio between the number of pixels for which the residual error is greater than the first error threshold, and the number of pixels of the set of pixels is greater than a first outlier threshold (C1a), a step of stopping the method and assigning a measure of minimum reliability to each pixel of the reference image (1047).

4. The method (100) according to any one of the preceding claims, wherein the set of pixels is selected by randomly drawing from the plurality of pixels in the reference image or by randomly drawing from the plurality of pixels in a region of the reference image for each region of the reference image.

5. The method (100) according to any of claims 1 to 3, wherein the simultaneous localisation and mapping algorithm further provides, for each pixel of the plurality of pixels, an uncertainty on the second depth estimate and the set of pixels is selected from pixels of the plurality of pixels meeting an uncertainty condition dependent on the uncertainty on the second depth estimate associated with the pixel.

6. The method (100) according to any one of the preceding claims, wherein the simultaneous localisation and mapping algorithm further provides, for each pixel of the plurality of pixels, an uncertainty on the second depth estimate and the step (105) of calculating the measure of reliability includes the following sub-steps of:
- For each pixel of the plurality of pixels, calculating a residual error between the first depth estimate associated with the pixel and the second depth estimate associated with the pixel, said second depth estimate associated with the pixel being weighted by the estimated scale factor or between the first depth estimate associated with the pixel and the second depth estimate associated with the pixel (1051), being metric by multiplying it by the estimated scale factor;
- For each pixel of the plurality of pixels, calculating from the residual error associated to the pixel, a measure of coherence dependent on the residual error associated to the pixel (1052);
- For each pixel not belonging to the plurality of pixels, associating a measure of coherence by interpolation from the measures of coherence associated with the pixels of the plurality of pixels (1053);
- For each pixel of the reference image, calculating a measure of reliability dependent on the measure of coherence and the uncertainty on the second depth estimate associated with the pixel (1054).

7. The method (100) according to any one of the preceding claims, wherein it further includes a step (106) of calculating, for each pixel of the reference image, a measure of density, including the following sub-steps of:
- For each pixel of the plurality of pixels, associating a measure of maximum density (1061);
- For each pixel not belonging to the plurality of pixels, assigning a measure of density by interpolation from the measures of density associated with the pixels of the plurality of pixels (1062).

8. A method for controlling a mobile robot or a mobile vehicle comprising the steps of the estimation method (100) according to any one of the preceding claims.

9. A system (200) for implementing the estimation method (100) according to any of claims 1 to 7 or the control method according to claim 8, including a camera (201) and a calculator (202).

10. The system (200) according to claim 9, **characterised in that** it further includes an inertial unit (203).

11. A computer program product comprising instructions which, when the program is executed on a computer, cause the same to implement the steps of the estimation method (100) according to any of claims 1 to 7, or of the control method according to claim 8.
